# EUROPEAN PATENT SPECIFICATION

(11) **EP 0 614 717 B1**
(45) Date of publication and mention of the grant of the patent: **17.09.1997**
(21) Application number: 94102211.3
(22) Date of filing: 14.02.1994
(51) Int. Cl.: B23C 1/00, B23C 3/35

(54) **Key duplicating machine**
Schlüsselkopiermaschine
Machine à copier les clés

(30) Priority: 05.03.1993 IT VE930006
(43) Date of publication of application: 14.09.1994
(73) Proprietor: SILCA S.p.A., I-31029 Vittorio Veneto (Treviso) (IT)
(72) Inventor: Foscan, Eros, I-31029 Vittorio Veneto (IT); Rossetto, Luigi, I-31029 Vittorio Veneto (IT)
(74) Representative: Piovesana, Paolo

(56) References cited:
- WO-A-90/03867
- CH-A- 673 612
- DE-A- 2 447 263
- FR-A- 2 448 404

## Description

This invention relates to a duplicating machine for bitted keys and double-bitted keys.

Bitted keys are keys comprising a head, a generally cylindrical shank and a bit extending radially from a portion of the shank distant from the head and carrying a cut pattern consisting of a plurality of teeth distributed along the free longitudinal edge of the bit perpendicular to the shank axis. The cross-section of the shank can also be other than circular, ie it can be square, flat etc.

Double-bitted keys (to which reference is expressly made in the following description) are keys comprising two bits extending radially from opposite sides of the shank.

Bitted and double-bitted keys are generally duplicated by machines comprising two clamps arranged to retain the original cut key and the blank key to be duplicated, both arranged with their shank axes parallel. The two clamps are mounted on a carriage movable relative to the machine base, on which there are mounted a feeler in a position facing the clamp of the original key, and a cutter in a position facing the blank key. The opposite arrangement can also be provided, with the feeler and cutter mounted on a carriage and the two clamps mounted on the machine base.

In all cases the original key is duplicated by sliding the feeler along the toothed profile of the original key, to cause the cutter to undergo corresponding movements relative to the blank key and form therein notches (and hence teeth) corresponding to those sensed by the feeler on the original key.

As the cutter thickness is always less than the width of the notches to be formed, the cutting process consists in pratice of a succession of operating steps comprising initially moving the cutter against the bit of the blank key to remove a part of material corresponding to the cutter thickness, then withdrawing it and finally axially shifting the cutter through a distance less than its thickness, to enable it to repeat the operation on a bit part adjacent to the preceding.

The amount of penetration of the cutter into the blank key is limited by the counteraction of the feeler resting on the original key.

There currently exist manual duplicating machines in which the cutter and feeler are moved manually relative to the clamps, and automatic duplicating machines in which these movements are motorized.

More specifically, in the case of automatic machines, to which category the machine of the present invention pertains, the approach and withdrawal of the cutter to and from the blank key are achieved by a first stepping motor, the axial shift of the cutter being generally achieved by a second stepping motor, which at the end of each withdrawal stroke causes the cutter to undergo a very small axial shift, for example of 0.1 mm.

A drawback of these known automatic duplicating machines is that they are generally designed to operate with one precise type of bitted key, and cannot be used to duplicate keys of a different type.

A further drawback is their extreme slowness of operation, they requiring up to 300 cycles to cut a bit of for example 3 cm in length.

A further drawback is that the mechanical movement results with the passage of time in war of the parts in mutual movement and hence the formation of slack, resulting in increasing inaccuracy.

A further drawback is that the feeler rests on the original key with a certain pressure and with a tangential sliding component, leading to wear of the key and hence non-uniform duplication of keys successively cut from the same original.

FR-A-2.448.404, against which claim 1 is delimited, relates to a cutter reproducing a bladed key with indented opposed longitudinal edges. It has two clamps with counterpoints to locate both the blank and the model keys on a lever actuated slide block. Both clamps can be rotated about the longitudinal axis of a key or blank once in place. This prevents the need to demount for cutting the second edge. The clamps are simply rotated 180° deg. The two clamps may rotate together, connected by an endless belt ove pulleys. The mounting point for the model key may adjust axially, and the axles on which the clamps are mounted may be parallel.

An object of the invention is to provide an automatic duplicating machine for keys, able to quickly duplicate an original key practically of any type.

A further object of the invention is to provide a duplicating machine which does not alter the original key, hence enabling the desired number of copies to be obtained therefrom, all with rigorously costant characteristics.

All these objects are attained according to the invention through a duplicating machine for keys, as described in claim 1.

A further object of the invention is to provide a duplicating machine in which the reading of the original key and the cutting of the blank key can be effected at different times, and in which in particular a single reading of an original key can be used to produce the desired number of duplicates.

A further object of the invention is to provide a duplicating machine which can be controlled by a computer, to duplicate a bitted key using data memorized from a previous reading of the original key or using a known pattern.

A further object of the invention is to provide a duplicating machine in which adaptation to different key characteristics and types is achievable with total ease.

A further object of the invention is to provide a duplicating machine which can correct any morphological abnormalities often present in original keys, and deriving from their use (bending of teeth, wear etc).

These objects are attained through the features of a duplicating machine as described in the dependent claims 2 to 18.

A preferred embodiment of the present invention is further described hereinafter with reference to the accompanying drawings, in which:

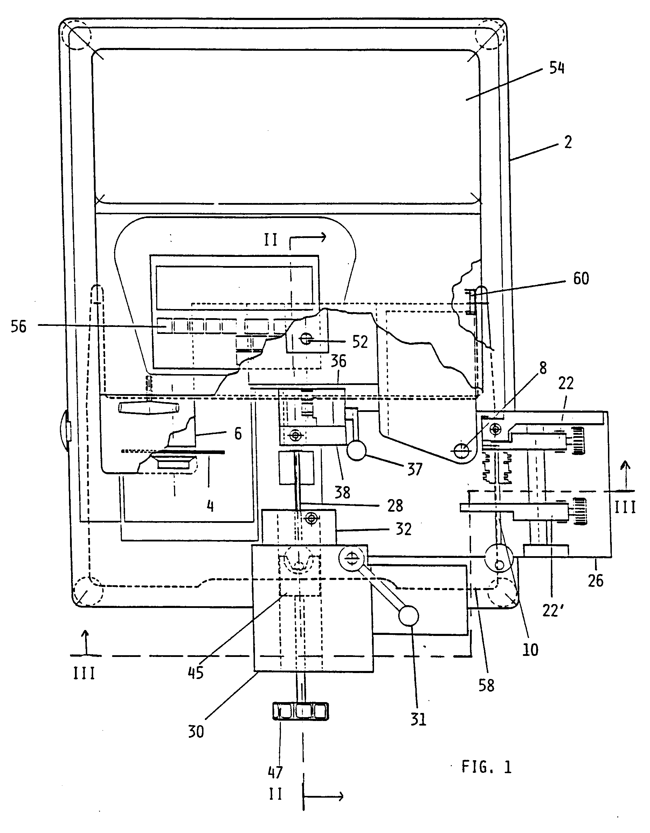

- Figure 1: is a schematic overall view thereof from above;

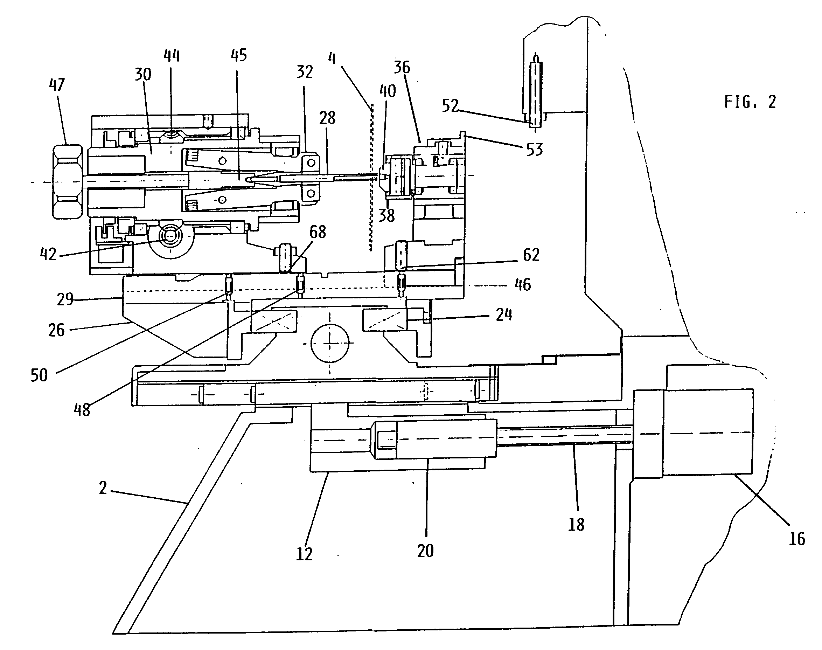

- Figure 2: is a longitudinal section therethrough on the line II-II of Figure 1;

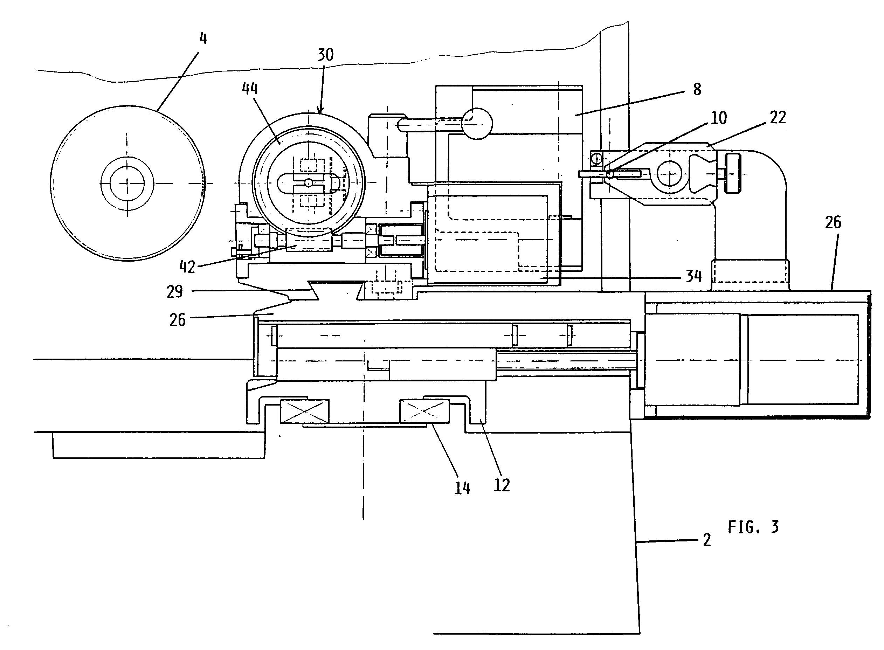

- Figure 3: is a broken cross-section therethrough on the line III-III of Figure 1;
- Figure 4: is a partial view thereof in the same view as Figure 2, but showing the version used for duplicating double-bitted keys with an intermediate stop;
- Figure 5: is a partial view thereof in the same view as Figure 1, but showing the version used for duplicating pump keys; and
- Figure 6: is a vertical section therethrough on the line VI-VI of Figure 5.

As can be seen from the figures, the automatic duplicating machine according to the invention comprises a base 2, on which there are mounted a circular cutter 4 driven by a variable speed electric motor 6, and an optical device 8 for reading the profile of the original key 10 to be duplicated, this being shown as a double-bitted key. The optical reading device 8 is of known type, for example as described in WO 90/03867.

The base 2 supports a first carriage 12 of longitudinal carriage, which is movable relative to the base along roller guides 14 parallel to the axis of the original key 10. This movement is achieved in conventional manner, for example by a stepping motor 16 mounted on the base 2 and provided with a ball-recirculation screw 18 engaging in a corresponding bush 20 rigid with the carriage 12.

The carriage 12 is also provided with two roller guides 24 perpendicular to the guides 14, to guide a second carriage 26, which is therefore movable perpendicular to the axis of the key 10 and is known herein as the transverse carriage. Again in this case the movement of the transverse carriage along the roller guides 24 is achieved in conventional manner by a stepping motor (not shown).

Two clamps 22, 22' for the original key to be duplicated are mounted on the carriage 26. Of the two clamps, the first 22 is fixed relative to the base 2 whereas the second 22' can be spaced from the first to adapt to the length of the original key, which is clamped between the two so that the double bit is arranged in a substantially horizontal position and readable, as will be apparent hereinafter, by the optical reading device 8.

On the transverse carriage 26 there is also mounted, perpendicular to the roller guides 24, a dovetail guide 29 for a clamp 30 for the blank key 28 to be cut. The clamp 30 is provided at one end with self-centering grippers 32 and is rotatable about the axis of the key 28 under the action of a stepping motor 34. With the grippers 32 there cooperates a support 36 for a holding centre 38, which supports the front end of said key 28. Both the rotatable clamp 30 and the support 36 for the holding centre 38 can be independently positioned along said dovetail guide 29 and can be locked in the desired position by a lever 31 and 37 respectively.

The connection between the stepping motor 34 and the self-centering grippers 32 of the rotatable clamp 30 is made via a worm 42 rigid with the shaft of the motor 34, and a helical gearwheel 44 rigid with the clamp 30.

Within the rotatable clamp 30, ie in a position on the opposite side of the self-centering grippers 32 to the holding centre 38, there is an essentially fork-shaped head retention member 45 for axially engaging the head of the blank key 28 to be cut. This is axially movable, this axial movement being controlled by a screw system operated by a knob 47.

On the longitudinal carriage 26 there are also applied three electrical contacts, namely a front contact 46, intermediate contact 48 and rear contact 50, the purpose of which is to adapt the machine to the different types of bitted keys, which are characterised by a different position of the stop 49 along the key shank, this position being frontal (Italian type key), intermediate (British type key) or rear (French type key).

Depending on whether the blank key 28 is of "female" type, ie with an axial cavity at the tip of its shank, or of "male" type, ie without an axial cavity, the holding centre 38, which is mounted idly on its support 36, consists either of conventional self-centering jaws 40 or a universal spring-loaded centre (not shown on the drawings).

On the machine base 2 there is also mounted a sensor 52 able to read a bar code 53 present on the support 36 for the holding centre, in order to determine from this reading the type of centre used and to automatically set the machine for processing the particular type of key to be cut.

Other sensors, electrical contacts and miscellaneous controls are also provided in the machine to ensure implementation of the correct operating cycle, to prevent false manoeuvres and to protect the operator.

That part of the base 2 not involving the carriages 12 and 26 houses the electrical equipment and is covered by a protection casing 54 on which there is mounted a keyboard 56 by which the various settings and working commands can be fed to a microprocessor controlling the operation of the machine.

A transparent protective screen 58 is hinged to the casing 54 to cover the moving parts and is associated with a safety microswitch 60 which, if the screen is raised, deactivates the electric motor 6 of the cutter 4 and also the motor 34 which rotates the rotatable clamp 30, and in addition the longitudinal carriage 12 and transverse carriage 36 to their end-of-travel rest position. To collect the swarf arising during the key cutting, at the base of the transverse carriage 26 there is positioned a swarf collection tray, or preferably the mouth of a suction system for continuously evacuating the swarf.

To duplicate an original key of double-bitted type with a frontal stop, the machine operation firstly comprises clamping said original key 10 between the fixed clamp 22 and movable clamp 22', previously spaced apart by a distance equal to the length of the key shank, in a position such that its two bits are substantially horizontal and hence correctly and completely readable by the optical reader 8.

The blank key to be duplicated is then chosen on the basis that the bit length, the bit width and the shank length of the blank key 28 must not be less than the corresponding dimensions of the original key 10, whereas the shank diameter must be the same for the two keys. The blank key must have a frontal stop, this being the front edge of the bit.

The blank key 28 is then positioned on the rotatable clamp 30 so that its front end (shown as of male type) is locked by the self-centering jaws 40 of the holding centre 38, its head is engaged by the head retention member 45 and its shank is engaged by the self-centering grippers 32. When in this state the support 36 for the holding centre 38 is positioned relative to the dovetail guide 29 such that a spring-loaded ball 62 provided within it activates the front electrical contact 46 to hence indicate to the microprocessor that the key being processed is of frontal stop type.

If the blank key 28 is of female type, the self-centering jaws 40 are replaced, as stated, by a spring-loaded rotatable centre, which can retract into the support for the holding centre and be locked in its correct working position for example by a grub screw.

Having clamped the blank key 28 in its correct working position, the microprocessor must be fed via the keyboard 56 with information relative to the constituent material of said key, so that the machine can set the speed of rotation of the cutter 4 to achieve best efficiency. In practice it can be sufficient for the machine to be programmed to operate with two different cutting speeds, one (the higher speed) for softer materials such as brass or Zn/AlMg alloy, and the other (the lower speed) for harder materials such as steel and cast iron. In this case, in order to avoid possible errors, it could be preferable for the machine to automatically set itself to operate at the lower speed on termination of each duplication, unless an actual command is fed in by the operator to operate at the higher speed.

Having set the machine in this manner it is ready to operate, ie either to read the original key 10 and cut the blank key 28, or merely read the original key, or merely cut the blank key, which three functions can be chosen cyclically via the keyboard by the operator, who can at his choice change the default function set for the machine ie reading and cutting.

Having started the automatic cycle the rotatable clamp 30 arranges the blank key 28 with its bits vertical, in order to prevent them undergoing any possible collision by the cutter 4 during the reading stage.

After the machine has stored all the information received by the optical reader 8, which firstly read the profile of that bit of the original key 10 facing the blank key in the direction from the front end to the rear end, then the profile of the opposite bit in the direction from the rear end to the front end, the cutting cycle is automatically started. The rotatable clamp 30 is firstly made to rotate the blank key 28 such that the bits pass from the vertical position to a position about 30° below horizontal, ie with that bit facing the cutter 4 inclined downwards through 30°.

The transverse carriage 26 is then made to advance towards the cutter 4 so as to commence formation of the first tooth. After the cutter has reached its maximum depth corresponding to the formation of that tooth, the rotatable clamp is rotated through 60°, so as to radius the tooth, ie to round its active surface, with its centre of curvature located on the axis of the key shank. As the width of the tooth under formation, measured parallel to the key axis, is generally greater than the cutter thickness, the transverse carriage 26 must withdraw the key 28 from the cutter to enable the next command to the longitudinal carriage 12 to cause said key to advance axially through a distance less than the thickness of said cutter, while at the same time enabling a command to the rotatable clamp to return the key into the position with its bit at -30°, before cutting is repeated on a bit portion adjacent to the preceding.

All these operations are controlled by the microprocessor on the basis of the data received by it during the reading stage and on the basis of the operational instructions memorized within it.

These instructions are such, inter alia, that during the active cutting stroke the cutter advancement speed (or rather the speed of advancement of the blank key 28 against the cutter) has the programmed value corresponding to the constituent material of the key, whereas the non-active advancement stroke and the return stroke take place at a higher speed in order to make the machine operating cycle as short as possible. The machine can also automatically adapt the speed at which the cutter advances against the bit to be cut, to the thickness of said bit, this thickness generally being based on the diameter of the key shank, and can be automatically measured by the optical reader 8 during the reading of the original key 10.

On termination of duplication, if further copies from the same original are required it is sufficient merely to remove the key which has just been cut and replace it with another blank key, to be subjected to the same operations. If however no further copies are required, the operations can be repeated on a further original key replacing the preceding.

The cutting data for several original keys can be memorized in the microprocessor or in a computer connected thereto, and these data called up by an appropriate code each time a key is to be cut in the absence of the original key.

The data in the microprocessor or in the computer connected to it can be obtained by effecting a reading cycle on the original with this positioned between the clamps 22 and 22', or by a suitable encoding program.

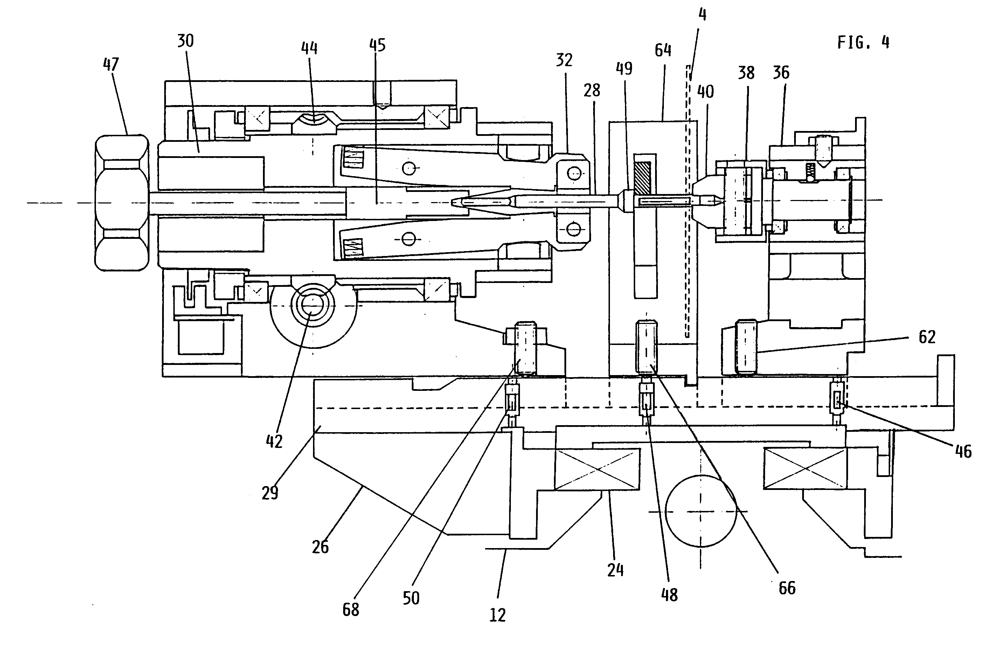

If a double-bitted key with an intermediate stop (British type key) is to be duplicated, a support 64 has to be used for a mechanical stop interacting with the intermediate stop 49 on the key 28 (see Figure 4). The support 64 can be secured to the dovetail guide 29 in a position such that a spring-loaded ball 66 similar to the spring-loaded ball 62 of the support 36 for the holding centre 38 effects via the electrical contact 48 a corresponding adjustment to the machine microprocessor while at the same time deactivating any signal provided by the electrical contact 46.

If a double-bitted key with a rear stop (French type key) is to be duplicated, the rotatable clamp 30 is slid manually to its rear end-of-travel position, so that a spring-loaded ball 68 similar to the spring-loaded balls 62 and 66 acts on the electrical contact 50 to indicate this circumstance to the machine microprocessor.

The blank key to be duplicated is then clamped, with its rear stop abutting against the self-centering grippers 32, by the clamp 30. The clamping of the key is then completed by sliding the support 36 for the holding centre 38 until the front end of the key 28 is engaged. The condition of the contacts 46, 48 and 50 is communicated to the microprocessor, which then sets the machine for duplicating that particular type of key.

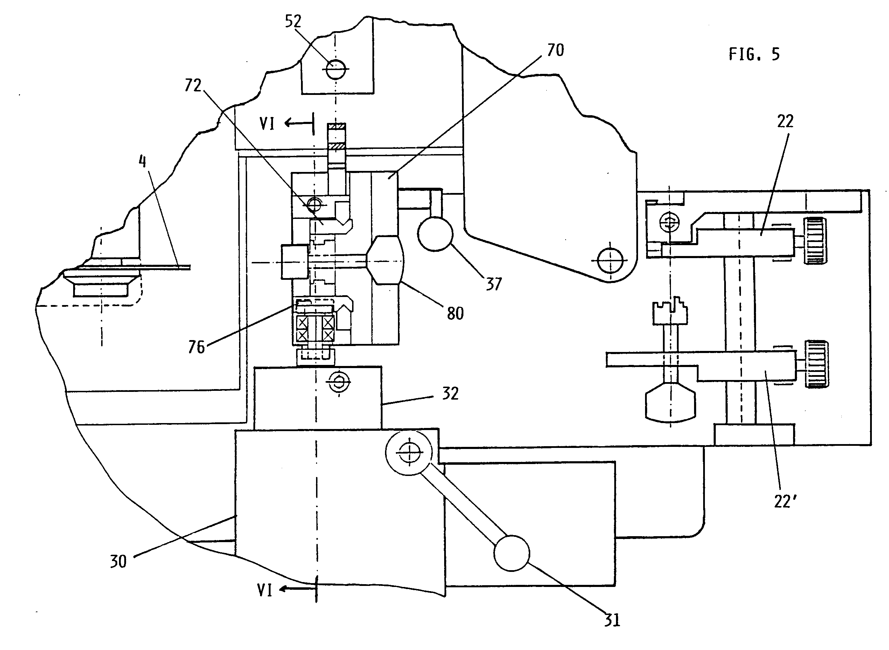

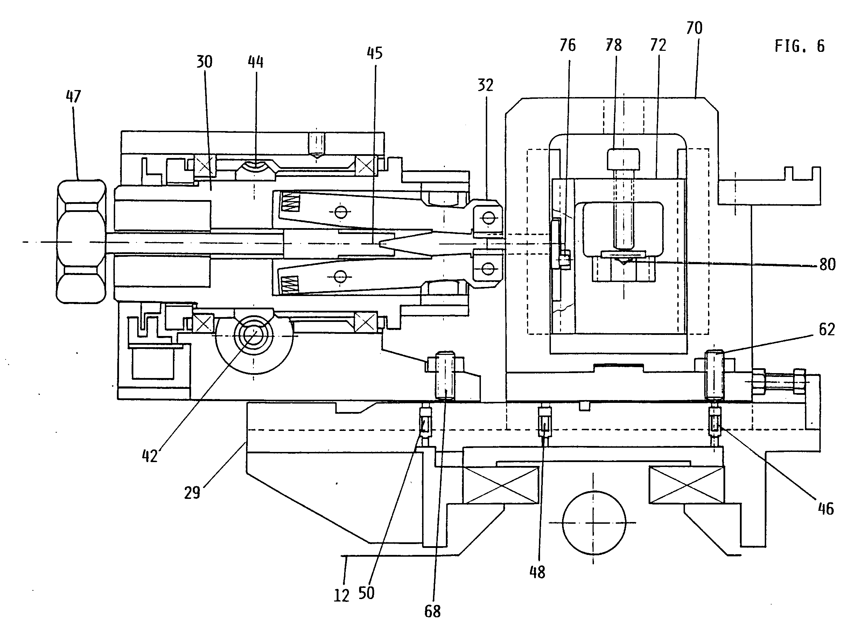

If a pump key is to be duplicated (see Figures 5 and 6), ie a key provided at its end with a double bit comprising toothing parallel to the key axis, the support for the holding centre is replaced by another support consisting essentially of two parts movable relative to each other in a substantially vertical direction, ie perpendicular to the plane defined by the two movements of the carriages 12 and 26 with respect to the base 2.

More specifically, the support for the holding centre is formed from two parts 70, 72 mutually engaged in a dovetail guide 74.

The part 70 is fixed to the dovetail guide 29 rigid with the transverse carriage 26, whereas the part 72 is engaged via a horizontal slot by an eccentric pin 76 fixed to the rotatable clamp 30. The pump key 80, arranged with its axis perpendicular to the axis of rotation of the rotatable clamp 30, is clamped to the part 72 by a clamp 78.

In this case the rotations of the clamp 30 are converted into vertical reciprocating movement of the pump key 80, which can be cut by the cutter 4 following a suitable command to the carriages 12, 26.

From the aforegoing it is apparent that the duplicating machine according to the invention is particularly advantageous compared with conventional duplicating machines, and in particular:
- it is of considerable versatility in that it can be adapted to keys of different types, which in the past required separate machines; specifically the machine of the invention allows duplication of bitted keys and double-bitted keys with a frontal, intermediate or rear stop, pump keys and other key types compatible with the movement system used;
- it operates at high cutting speed;
- it results in perfect key duplication even if used by non-specialized personnel;
- it enables a virtually unlimited number of perfectly identical keys to be obtained from one original without resulting in even minimum wear of the original;
- it enables keys to be read and then cut at different times, so making the two operations mutually independent;
- because of this separation of the reading and cutting stages it can act on the duplication cycle via the microprocessor or via an external computer,. to correct the read dimensions on the basis of coded values for the original key;
- it enables the cutter to work under optimum operating conditions;
- it duplicates without the need for supervision by specialized personnel who, once the work has been set up, are available for other duties;
- it enables radiusing of the bit teeth to be automatically effected with its centre on the shank axis, and can also radius with different radii and/or different centres of curvature if the machine is operated by a computer;
- it enables pump keys to be duplicated.

## Claims

1. An automatic duplicating machine for bitted and double-bitted keys, with a first clamp (22, 22') for an original key (10) and a second clamp (30) for a blank key (28) to be duplicated, said clamps (22,22',30) being mounted on a carriage (26) movable in a plane in two perpendicular directions relative to a cutter (4) for acting on said blank key (28) in order to cut it, said second clamp (30) being provided with a head retention member (45) and being rotatable in both directions about the axis of the blank key shank and being positionable along said carriage (26) parallel to said axis, and an idle holding centre (38) coaxially facing said rotatable second clamp (30), characterised in that the second clamp (30) is provided with self-centering grippers (32) for gripping the blank key shank and in that the idle holding centre (38) is positionable along said carriage (26) parallel to said axis of the shank and independently of said second clamp (30).

2. A machine as claimed in claim 1, characterised in that the clamp for the original key (10) comprises two pairs of jaws, of which one pair (22) is fixed and the other (22') can be spaced from the fixed pair to conform with the dimensions of said key (10).

3. A machine as claimed in claim 1, characterised by comprising a base (2) on which there are mounted the cutter (4) and, movable parallel to the blank key (28) to be cut, a first carriage (12) on which there is mounted a second carriage (26) movable perpendicular to the movement of the first carriage (12) and supporting the rotatable clamp (30) for said key to be cut.

4. A machine as claimed in claim 3, characterised in that an optical reader for reading the bit of the original key (10) is applied to the machine base.

5. A machine as claimed in claim 1, characterised in that a guide (29) parallel to the axis of the blank key (28) to be cut is applied to the carriage (26), said rotatable second clamp (30) and a support (36) for the holding centre (38) being independently lockable along said guide.

6. A machine as claimed in claim 3, characterised in that a sensor (52) which, as a support (36) for the holding centre (38) passes by, is able to determine the type of support used is applied to the machine base (2).

7. A machine as claimed in claim 1, characterised in that the rotatable second clamp (30) is provided with a helical gearwheel engaged by a worm (42) driven by an electric stepping motor (34).

8. A machine as claimed in claim 1, characterised in that the head retention member (45) is operable axially by a screw control (47).

9. A machine as claimed in claim 1, characterised in that the head retention member (45) is fork shaped.

10. A machine as claimed in claim 1, characterised in that a switch (50) operable by the rotatable clamp (30) when situated in its farthest position from the holding centre (38) is associated with the carriage (26).

11. A machine as claimed in claim 1, characterised in that the holding centre (38) is provided with self-centering jaws.

12. A machine as claimed in claim 1, characterised in that the holding centre (28) consists of a spring-loaded universal centre.

13. A machine as claimed in claim 1, characterised in that a switch (46) operable by a support (36) for the holding centre (38) when located in its farthest position from the rotatable second clamp (30) is associated with the carriage (26).

14. A machine as claimed in claim 1, characterised by comprising a support (64) for a removable mechanical stop cooperating with an intermediate stop (49) on the blank key (28) to be cut.

15. A machine as claimed in claim 14, characterised in that a switch (48) operable by the support (64) when located in the predetermined position of the intermediate stop (49) on the blank key (28) to be cut is associated with the carriage (26).

16. A machine as claimed in claims 5, 10, 13 and 15, characterised in that the switches (46, 48, 50) are incorporated into the guide (29).

17. A machine as claimed in claim 1, characterised in that a support (36) for the holding centre (38) comprises a first part (70) secured to the carriage (26) and a second part (72) movable relative to the first part (70) perpendicularly to the carriage (26) under the control of the rotatable second clamp (30) via an eccentric linkage (76), to said movable part there being applied a clamp (78) for clamping a pump key (80) with its axis parallel to the plane of the cutter (4).

18. A machine as claimed in claim 1, characterised in that it further comprises a microprocessor commandable via a keyboard (56).

## Patentansprüche

1. Automatische Kopiermaschine für ein- und zweibärtige Schlüssel mit einer ersten Spanneinrichtung (22, 22') für einen Originaischlüssel (10) und einer zweiten Spanneinrichtung (30) für einen zu kopierenden Schlüsselrohling (28), welche Spanneinrichtungen (22, 22', 30) auf einem Schlitten (26) montiert sind, der in einer Ebene in zwei senkrechten Richtungen gegenüber einem Messer (4) zur Bearbeitung des besagten Schlüsselrohlings (28) durch Schneiden bewegbar ist, wobei die besagte zweite Spanneinrichtung (30) mit einem Kopfhalteglied (45) versehen und in beiden Richtungen um die Achse des Schafts des Schlüsselrohlings drehbar und entlang dem besagten Schlitten (26) parallel zu der besagten Achse positionierbar ist, und einem Leerlaufhaltemittelpunkt (38), der der besagten drehbaren zweiten Spanneinrichtung (30) koaxial gegenüberliegt, dadurch gekennzeichnet, daß die zweite Spanneinrichtung (30) mit selbstzentrierenden Greifern (32) zum Halten des Schafts des Schlüsselrohlings versehen ist, und daß der Leerlaufhaltemittelpunkt (38) entlang dem besagten Schlitten (26) parallel zu der besagten Achse des Schaftes und unabhängig von der zweiten Spanneinrichtung (30) positionierbar ist.

2. Maschine nach Anspruch 1, dadurch gekennzeichnet, daß die Spanneinrichtung für den Originalschlüssel (10) zwei Paare von Backen umfaßt, wobei ein Paar (20) feststehend ist und das andere (22') im Abstand von dem feststehenden Paar angeordnet werden kann, um den Abmessungen des besagten Schlüssels (10) zu entsprechen.

3. Maschine nach Anspruch 1, dadurch gekennzeichnet, daß sie eine Basis (2) umfaßt, auf der das Messer (4) montiert ist, und parallel zu dem zu schneidenden Schlüsselrohling (28) einen ersten Schlitten (12), auf dem ein zweiter Schlitten (26) angeordnet ist, der senkrecht zur Bewegung des ersten Schlittens (12) bewegbar ist und die drehbare Spanneinrichtung (30) für den besagten zu schneidenden Schlüssel trägt.

4. Maschine nach Anspruch 3, dadurch gekennzeichnet, daß ein optischer Leser zum Lesen des Bartes des Originalschlüssels (10) an der Maschinenbasis angebracht ist.

5. Maschine nach Anspruch 1, dadurch gekennzeichnet, daß eine Führung (29) parallel zur Achse des zu schneidenden Schlüsselrohlings (28) an dem Schlitten (26) angebracht ist, wobei die besagte drehbare zweite Spanneinrichtung (30) und ein Träger (36) für den Haltemittelpunkt (38) unabhängig entlang der besagten Führung arretierbar sind.

6. Maschine nach Anspruch 3, dadurch gekennzeichnet, daß ein Sensor (52), der in der Lage ist, die Art des verwendeten Trägers zu bestimmen, wenn ein Träger (36) für den Haltemittelpunkt (38) sich vorbeibewegt, an der Maschinenbasis (2) angebracht ist.

7. Maschine nach Anspruch 1, dadurch gekennzeichnet, daß die drehbare zweite Spanneinrichtung (30) mit einem spiralförmigen Zahnrad versehen ist, das mit einer Schnecke (42) in Eingriff steht, welche von einem elektrischen Schrittmotor (34) angetrieben wird.

8. Maschine nach Anspruch 1, dadurch gekennzeichnet, daß das Kopfhalteglied (45) mit einer Einstellschraube (47) axial betätigbar ist.

9. Maschine nach Anspruch 1, dadurch gekennzeichnet, daß das Kopfhalteglied (45) gabelförmig ist.

10. Maschine nach Anspruch 1, dadurch gekennzeichnet, daß ein Schalter (50), welcher durch die drehbare Spanneinrichtung (30) betätigbar ist, wenn diese in ihrer von dem Haltemittelpunkt (38) entfernten Endposition angeordnet ist, dem Schlitten (26) zugeordnet ist.

11. Maschine nach Anspruch 1, dadurch gekennzeichnet, daß der Haltemittelpunkt (38) mit selbtzentrierenden Backen versehen ist.

12. Maschine nach Anspruch 1, dadurch gekennzeichnet, daß der Haltemittelpunkt (28) aus einem federbelasteten Universalmittelpunkt besteht.

13. Maschine nach Anspruch 1, dadurch gekennzeichnet, daß ein Schalter (46), der durch einen Träger (36) für den Haltemittelpunkt (38) betätigbar ist, wenn sich dieser in der von der drehbaren zweiten Spanneinrichtung (30) entfernten Endposition befindet, dem Schlitten (26) zugeordnet ist.

14. Maschine nach Anspruch 1, dadurch gekennzeichnet, daß sie einen Träger (64) für einen entfernbaren mechanischen Anschlag umfaßt, welcher mit einem Zwischenanschlag (49) an dem zu schneidenden Schlüsselrohling (28) zusammenarbeitet.

15. Maschine nach Anspruch 14, dadurch gekennzeichnet, daß ein Schalter (48), welcher durch den Träger (64) betätigbar ist, wenn sich dieser in einer vorgegebenen Position von dem Zwischenanschlag (49) an dem zu schneidenden Schlüsselrohling (28) befindet, dem Schlitten (26) zugeordnet ist.

16. Maschine nach Anspruch 5, 10, 13 und 15, dadurch gekennzeichnet, daß die Schalter (46, 48, 50) in die Führung (29) eingebaut sind.

17. Maschine nach Anspruch 11, dadurch gekennzeichnet, daß ein Träger (36) für den Haltemittelpunkt (38) ein erstes Teil (70), das an dem Schlitten (26) befestigt ist, und ein zweites Teil (72) umfaßt, das gegenüber dem ersten Teil (70) senkrecht zu dem Schlitten (26) unter Kontrolle der drehbaren zweiten Spanneinrichtung (30) über eine Exzenterverbindung (76) bewegbar ist, wobei an dem besagten bewegten Teil eine Spanneinrichtung (78) zum Einspannen eines Pumpenschlüssels (80) mit dessen Achse parallel zur Ebene des Messers (4) angebracht ist.

18. Maschine nach Anspruch 1, dadurch gekennzeichnet, daß sie außerdem einen Mikroprozessor, der mit einer Tastatur (56) steuerbar ist, umfaßt.

## Revendications

1. Machine automatique à copier des clés à panneton simple et double, avec un premier dispositif de serrage (22, 22') pour une clé d'origine (10) et un second dispositif de serrage (30) pour une ébauche de clé (28) à copier, les dispositifs de serrage (22, 22', 30) étant montés sur un chariot (26) mobile dans un plan suivant deux directions perpendiculaires par rapport à un outil de découpe (4) pour agir sur ladite ébauche de clé (28) de manière à la découper, le second dispositif de serrage (30) étant équipé d'un élément de rétention de tête (45) et pouvant tourner suivant les deux directions autour de l'axe de la tige de l'ébauche de clé et pouvant être positionnée le long dudit chariot (26) parallèlement audit axe, et d'une partie centrale de maintien de ralenti (38) faisant face coaxialement au second dispositif de serrage pouvant tourner (30), caractérisée en ce que le second dispositif de serrage (30) est muni de pinces auto-centreuses (32) pour saisir la tige de l'ébauche de clé, et en ce que la partie centrale de maintien de ralenti (38) peut être positionnée le long dudit chariot (26) parallèlement audit axe de la tige et indépendamment du second dispositif de serrage (30).

2. Machine comme revendiquée dans la revendication 1, caractérisée en ce que le dispositif pour la clé d'origine (10) comprend deux paires de mâchoires, dont une paire (22) est fixe et l'autre (22') peut être espacée de la paire fixe pour s'adapter aux dimensions de ladite clé (10).

3. Machine comme revendiquée dans la revendication 1, caractérisée en ce qu'elle comprend une embase (2) sur laquelle sont montés l'outil de découpe (4) et, pouvant se déplacer parallèlement à l'ébauche de clé (28) à découper, un premier chariot (12) sur lequel est monté un second chariot (26) pouvant se déplacer perpendiculairement au déplacement du premier chariot (12) et supportant le dispositif de serrage pouvant tourner (30) pour ladite clé à découper.

4. Machine comme revendiquée dans la revendication 3, caractérisée en ce qu'un lecteur optique pour lire le panneton de la clé d'origine (10) est monté sur l'embase de la machine.

5. Machine comme revendiquée dans la revendication 1, caractérisée en ce qu'un guide (29) parallèle à l'axe de l'ébauche de clé (28) à découper est appliqué au chariot (26), ledit second dispositif de serrage pouvant tourner (30) et un support (36) pour la partie centrale de maintien (38) étant verrouillables indépendamment le long dudit guide.

6. Machine comme revendiquée dans la revendication 3, caractérisée en ce qu'un capteur (52) qui, lorsqu'un support (36) pour la partie centrale de maintien (38) passe à côté, est capable de déterminer le type de support utilisé, est monté sur l'embase de la machine (2).

7. Machine comme revendiquée dans la revendication 1, caractérisée en ce que le second dispositif de serrage pouvant tourner (30) est muni d'une roue dentée hélicoïdale engagée sur une vis sans fin (42) entraînée par un moteur pas à pas électrique (34).

8. Machine comme revendiquée dans la revendication 1, caractérisée en ce que l'élément de rétention de tête (45) peut être actionné axialement par une commande à vis (47).

9. Machine comme revendiquée dans la revendication 1, caractérisée en ce que l'élément de rétention de tête (45) est en forme de fourche.

10. Machine comme revendiquée dans la revendication 1, caractérisée en ce qu'un interrupteur (50) pouvant être actionné par le dispositif de serrage (30) pouvant tourner, lorsqu'il est placé dans sa position la plus éloignée de la partie centrale de maintien (38), est associé au chariot (26).

11. Machine comme revendiquée dans la revendication 1, caractérisée en ce que la partie centrale de maintien (38) est muni de mâchoires auto-centreuses.

12. Machine comme revendiquée dans la revendication 1, caractérisée en ce que la partie centrale de maintien (38) consiste en un centre universel à ressort.

13. Machine comme revendiquée dans la revendication 1, caractérisée en ce qu'un interrupteur (46) pouvant être actionné par un support (36) pour la partie centrale de maintien (38), lorsqu'il est placé dans sa position la plus éloignée du second dispositif de serrage (30) pouvant tourner, est associé au chariot (26).

14. Machine comme revendiquée dans la revendication 1, caractérisée en ce qu'elle comprend un support (64) pour une butée mécanique amovible coopérant avec une butée intermédiaire (49) sur l'ébauche de clé (28) à découper.

15. Machine comme revendiquée dans la revendication 14, caractérisée en ce qu'un interrupteur (48) pouvant être actionné par le support (64), lorsqu'il est placé dans la position prédéterminée de la butée intermédiaire (49) sur l'ébauche de clé (28) à découper, est associé au chariot (26).

16. Machine selon les revendications 5, 10, 13 et 15, caractérisée en ce que les interrupteurs (46, 48, 50) sont incorporés dans le guide (29).

17. Machine comme revendiquée dans la revendication 1, caractérisée en ce qu'un support (36) pour la partie centrale de maintien (38) comprend une première partie (70) fixée au chariot (26) et une seconde partie (72) mobile par rapport à la première partie (70) perpendiculairement au chariot (26) sous la commande du second dispositif de serrage pouvant tourner (30) via une liaison à excentrique (76), un dispositif de serrage (78) étant appliqué à ladite partie mobile pour serrer une clé à pompe (80) avec son axe parallèle au plan de l'outil de découpe (4).

18. Machine comme revendiquée dans la revendication 1, caractérisée en ce qu'elle comprend, en outre, un microprocesseur pouvant être commandé par un clavier (56).
